# FASCICULE DE BREVET EUROPEEN

(11) **EP 0 486 360 B1**
(45) Date de publication et mention de la délivrance du brevet: **12.10.1994**
(21) Numéro de dépôt: 91402984.8
(22) Date de dépôt: 07.11.1991
(51) Int. Cl.: B65G 47/51, B65G 51/03

(54) **Dispositif d'accumulation dynamique de récipients dans une chaîne de transfert par jets d'air**
Dynamische Speichervorrichtung für Behälter in einer pneumatisch betriebenen Transferstrasse
Dynamic accumulation device for containers in a transfer line with air jets

(30) Priorité: 15.11.1990 FR 9014476
(43) Date de publication de la demande: 20.05.1992
(73) Titulaire: MECA NEU, 76170 Lillebonne (FR)
(72) Inventeur: Declercq, Philippe, F-59110 La Madeleine (FR); Maurice, Jean-Luc, F-59800 Lille Fives (FR)
(74) Mandataire: Hénnion, Jean-Claude

(56) Documents cités:
- EP-A- 0 369 126
- FR-A- 2 618 753
- FR-A- 2 621 302
- US-A- 4 499 987
- US-A- 4 635 784

## Description

La présente invention concerne le stockage de récipients, par accumulation dynamique, dans une chaîne de transfert desdits récipients par jets d'air, notamment de récipients du type bouteille en matière plastique. Elle concerne plus particulièrement un dispositif de stockage pour des récipients qui comportent une protubérance ou collerette au niveau de leur col et qui sont maintenus verticalement grâce à cette protubérance pendant leur transfert.

Dans les industries des boissons, il est souvent nécessaire d'avoir recours à un stockage temporaire de récipients, par exemple du fait de la différence de productivité entre les machines de fabrication des récipients et les machines de remplissage. C'est le cas dans l'embouteillage des récipients en matière plastique destinés au grand public, la cadence horaire des machines de fabrication par soufflage des récipients étant généralement de l'ordre de 24.000 récipients, c'est-à-dire légèrement supérieure à celle des machines de remplissage qui est de 20 à 22.000 récipients. Bien sûr dans certains cas, c'est l'inverse qui peut se produire.

Afin d'assurer une alimentation continue des postes de travail, en flux tendu, on a donc recours à un stockage tampon des récipients.

Pour la constitution de ce stockage tampon, il faut prendre en compte deux contraintes, la très grande productivité des machines d'embouteillage et l'espacement limité entre les différents postes.

Concernant la productivité, la solution adoptée réside dans l'utilisation de transporteurs à propulsion par jets d'air, qui sont les seuls capables d'atteindre les cadences en question, en particulier lorsqu'il s'agit de récipients dont la stabilité en position verticale est problématique, comme les bouteilles en matière plastique dont la hauteur est importante comparativement à la section transversale et dont le fond a une forme du type pétaloïde.

De tels transporteurs par jets d'air sont connus par le document EP-A-70.931. Ils permettent de réaliser un stockage par accumulation dynamique des récipients en ligne : mais, en pratique, du fait de l'espacement limité entre les postes de travail, la quantité stockée est insuffisante, ce qui entraîne des arrêts et des remises en route fréquentes de ces transporteurs.

On peut envisager d'avoir recours à un stockage non en ligne, mais en vrac, par exemple dans des silos ; cependant dans ce type de stockage, les récipients perdent leur orientation et leur organisation et il devient nécessaire de mettre en oeuvre des dispositifs redresseurs en sortie. En pratique la cadence horaire du stockage par silo est de l'ordre de 24 à 30.000 récipients.

Un autre procédé, dit de palettisation, a été utilisé, dans lequel les récipients sont alimentés depuis plusieurs lignes de transfert sur un plan de transfert par soufflage dont la largeur va progressivement en rétrécissant jusqu'à ce que les flancs des récipients soient quasiment en contact. La dépalettisation, c'est-à-dire la sortie du plan de stockage, nécessite de faire converger les récipients vers une ou quelques lignes de transfert. La cadence horaire est de l'ordre de 15 à 20.000 récipients, en particulier pour les bouteilles à fond de forme pétaloïde.

Une autre voie a consisté à proposer des systèmes à dérivations successives des lignes de transfert, notamment dans les documents US-A-4,570,783 et FR-A-2 621 302, le dernier divulguant un dispositif de stockage selon la première partie de la revendication 1. Les récipients bifurquent, grâce à des aiguillages, selon des lignes de dérivation parallèles. Les bifurcations ne peuvent se faire à angle droit, ainsi la longueur de chaque ligne de dérivation se trouve réduite par rapport à la ligne précédente, du fait de l'angle d'entrée et de sortie. Compte-tenu de l'espacement nécessaire en largeur pour chaque ligne de dérivation par jets d'air, ainsi que de la réduction progressive desdites lignes, le demandeur estime qu'il faudrait plus de mille mètres carrés de surface au sol pour atteindre un stockage par accumulation dynamique de 40.000 récipients de diamètre 88mm. De plus cette solution nécessite quelques trois cents aiguillages, avec tous les risques de dysfonctionnement que cela peut entraîner.

Le but que cherche à atteindre le demandeur est de réaliser un stockage de récipients par accumulation dynamique qui pallie les inconvénients précités, en ce qu'il permet de travailler à des cadences très importantes, sans risque de dysfonctionnements et avec une surface au sol relativement faible.

Ce but est parfaitement atteint grâce au dispositif selon l'invention. Il s'agit d'un dispositif de stockage, par accumulation dynamique, de récipients, notamment en matière plastique, qui comportent une protubérance au niveau de leur col. Ledit dispositif comprend de manière connue des moyens de transfert par jets d'air des récipients le long d'une ligne délimitée par deux supports latéraux aptes à supporter les récipients par leurs protubérances lors du transfert . De manière caractéristique, le dispositif de l'invention comporte :
a. un carrousel constitué d'une multiplicité de supports latéraux délimitant deux à deux une pluralité de lignes de stockage parallèles à ladite ligne ;
b. au moins un ensemble de transfert par jets d'air pour la formation des lignes de stockage et pour leur évacuation ;
c. et des moyens d'entraînement, aptes à déplacer pas à pas le carrousel transversalement par rapport à ladite ligne, en synchronisation avec le fonctionnement du ou des ensembles de transfert.

Dans une version simplifiée de l'invention, le dispositif peut ne comporter qu'un seul ensemble transfert, réalisant à la fois la formation et l'évacuation de toutes les lignes de stockage. Cependant il est souvent préférable que le dispositif comporte au moins un ensemble de transfert par jet d'air pour la formation des lignes de stockage, dit ensemble transfert d'entrée, et un ensemble transfert par jet d'air pour l'évacuation des lignes de stockage, dit ensemble transfert de sortie. Dans ce cas, les deux opérations - entrée et sortie - peuvent être simultanées; de plus les premiers récipients entrés dans le dispositif peuvent être les premiers sortis.

Dans la suite du présent texte, on parlera de l'ensemble transfert d'entrée et de l'ensemble transfert de sortie, sachant que , selon la version simplifiée , il peut s'agir d'un seul et même ensemble, assurant les deux fonctions de formation et d'évacuation des lignes de stockage.

Le deuxième jeu de revendications exclu cette verion simplifiée de l'invention, gui est connue par le document EP-A-485344. Ce document en vertu de l'article 54 (3) et (4) CBE divulgue un Dispositif de stockage , par accumulation dynamique, de récipients qui comportent une protubérance au niveau de leur col, comprenant :
a. un carrousel constitué d'une multiplicité de supports latéraux délimitant deux à deux une pluralité de lignes de stockage parallèles;
b. un premier ensemble transfert par jets d'air desdits récipients, qui est placé en regard du carrousel, au droit d'une ligne de stockage, délimitée par deux supports latéraux aptes à supporter les récipients par leurs protubérances lors de leur transfert;
c. et des moyens d'entraînement aptes à déplacer pas à pas le carrousel transversalement par rapport à ladite ligne, en synchronisation avec le fonctionnement de l'ensemble de transfert.

On comprend que le carrousel est immobile pendant l'accumulation des récipients dans l'ensemble transfert d'entrée c'est-à-dire pendant la formation d'une ligne de stockage, et qu'une fois cette opération réalisée, il est déplacé d'un pas correspondant à un espacement réduit, de sorte que les deux supports latéraux supportant les récipients de ladite ligne de stockage soient ainsi déplacés transversalement de l'ensemble transfert d'entrée et que les deux supports latéraux suivants soient positionnés dans l'ensemble transfert et puissent supporter les récipients de la ligne de stockage suivante.

Il en est de même pour l'ensemble transfert de sortie correspondant à l'évacuation des lignes de stockage successives.

Ainsi dans le carrousel, le stockage des récipients est réalisé sous forme de lignes de stockage, accolées et parallèles les unes aux autres.

Selon un premier mode de réalisation, le carrousel a la forme d'une boucle oblongue ayant deux zones sensiblement rectilignes, et le dispositif comporte au moins quatre ensembles transferts, un ensemble de formation et un ensemble d'évacuation étant placés sensiblement aux extrémités de chaque zone rectiligne.

Dans cette version, seules les zones rectilignes du carrousel sont effectivement utilisées pour le stockage. Les zones en arc de cercle, reliant les zones rectilignes de la boucle oblongue, sont constamment inoccupées.

Selon un second mode de réalisation, le dispositif comporte un seul ensemble transfert de formation et un seul ensemble d'évacuation, placés sur le carrousel le long de deux tiges adjacentes en sorte qu'une ligne de stockage parcourt toute la boucle du carrousel entre l'ensemble de formation et l'ensemble d'évacuation.

Dans cette version, tout le carrousel est utilisé pour le stockage.

Le carrousel comporte deux chaînes transversales, mues par les moyens d'entraînement; chacune de ces chaînes est solidaire des extrémités respectivement avant et arrière des supports latéraux par des pièces de solidarisation; et les ensembles de transfert comportent des propulseurs placés soit au-dessus du plan horizontal passant par les deux chaînes, projetant obliquement les jets d'air au-dessus des récipients de la ligne de stockage, soit en-dessous du plan horizontal passant par les deux chaînes projetant les jets d'air latéralement sur le flanc des récipients de la ligne de stockage.

Les deux chaînes sont maintenues par des glissières, formant un chemin de roulement.

Selon un mode de réalisation, chaque pièce de solidarisation est solidaire des deux chaînes transversales par un axe de rotation, et le support correspondant consiste en une plaque rectangulaire dont les extrémités avant et arrière sont fixées sous ladite pièce de solidarisation de sorte que lors du déplacement de la pièce de solidarisation le long de la boucle du carrousel la plaque formant support latéral reste constamment horizontale, sous l' axe de rotation.

De préférence, sous la même pièce de solidarisation, sont fixées deux plaques rectangulaires correspondant aux supports latéraux de deux lignes de stockage successives.

Dans ce mode de réalisation, les plaques formant les supports latéraux sont suspendues aux deux chaînes par les axes de rotation, à la manière de balancelles. On comprend que ce mode de réalisation est particulièrement destiné au carrousel en forme de boucle oblongue équipé de deux ensembles de formation et d'évacuation, situés respectivement dans les deux zones rectilignes de la boucle. En effet dans le cas des pièces de solidarisation en forme de balancelles, les récipients ne peuvent être supportés par les supports latéraux que dans les zones rectilignes.

Selon un autre mode de réalisation, chaque pièce de solidarisation est fixée rigidement aux deux chaînes transversales et à une même pièce de solidarisation sont fixées deux plaques rectangulaires formant mâchoires et correspondant aux deux supports latéraux d'une même ligne de stockage.

Dans ce mode de réalisation, les plaques formant supports latéraux ont leur orientation qui suit la forme de la boucle du carrousel. Les récipients de la ligne de stockage formée entre lesdits supports latéraux ont une orientation constamment perpendiculaire à celle desdites plaques. Ce mode de réalisation est particulièrement adapté à la version précitée dans laquelle un ensemble de transfert de formation est accolé à un ensemble de transfert d'évacuation. Les récipients maintenus dans les mâchoires parcourent toute la périphérie extérieure du carrousel, étant constamment perpendiculaires au plan passant par les deux chaînes.

C'est un autre objet de l'invention que de proposer une installation de transport de récipients qui comporte un circuit de dérivation pour l'alimentation et l'évacuation d'au moins deux dispositifs précités, par exemple deux dispositifs dont les carrousels sont côte à côte ou deux dispositifs dont les carrousels sont l'un au-dessus de l'autre, ou de préférence quatre dispositifs dont les carrousels sont deux à deux côte à côte et l'un au-dessus de l'autre ; dans tous les cas les lignes de stockage ont une même direction.

Une telle installation est à-même de répondre aux exigences de productivité à grande cadence sur un espace aussi réduit que possible, et sans perturbation quant à l'orientation et à l'organisation des récipients.

D'autres avantages et caractéristiques ressortiront de la description qui va être faite de deux exemples de réalisation d'un carrousel de stockage, illustré par le dessin annexé dans lequel :
La figure 1 et une vue schématique d'un ensemble transfert par jets d'air traditionnel
La figure 2 est une vue schématique en perspective, représentant le principe du carrousel équipé d'un ensemble transfert de formation et d'un ensemble transfert d'évacuation
La figure 3 est une vue schématique de face d'un exemple de dispositif dont les pièces de solidarisation sont suspendues aux chaînes en forme de balancelles
La figure 4 est une vue schématique de face d'un exemple de dispositif dont les pièces de solidarisation sont des machines rigidement fixées aux chaînes transversales
La figure 5 est une vue schématique d'une installation à quatre carrousels de stockage.

Les bouteilles 2 en matière plastique qui sont d'un usage très répandu dans les boissons domestiques ont un col 7 qui comporte une protubérance ou collerette 8 qui forme une excroissance annulaire autour du col 7. Ces bouteilles 2 sont légères, hautes et ont un fond 3 qui n'est pas plat mais dont la section a une forme de pétales. Pour toutes ces raisons, les bouteilles 2 ont une position verticale très instable lorsqu'elles sont placées debout sur un support, et leur transfert est assuré par des jets d'air tandis qu'elles sont maintenues verticalement par la protubérance 8.

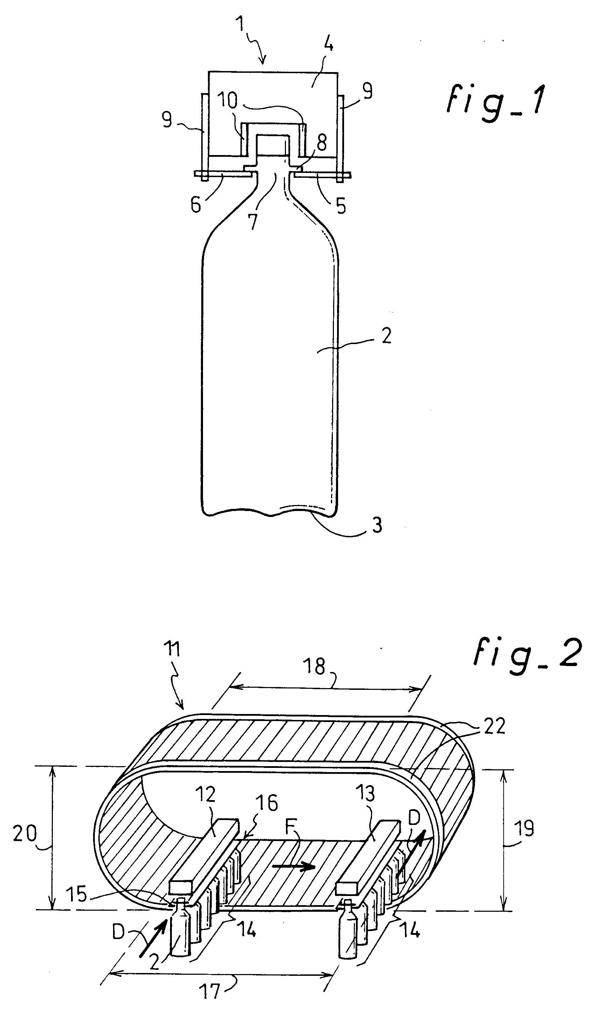

Le propulseur 1 par jets d'air traditionnel illustré à la figure 1 comprend un caisson 4 alimenté en air faiblement pressurisé, de l'ordre de quelques décapascals, ayant la forme d'un U renversé, et deux supports latéraux 5,6, fixés au caisson 4 par des montants 9.

Lorsqu'elle arrive dans le propulseur 1, la bouteille 2 est positionnée de telle sorte que la partie haute, au-dessus de la protubérance 8, pénètre dans la zone délimitée d'une part par la partie interne du U et d'autre part par les deux supports latéraux 5,6.

Les flancs de la partie interne du U sont garnis de grilles 10 pour le passage de l'air, lesdites grilles 10 étant orientées obliquement dans la direction du transfert des bouteilles.

Ainsi ce sont les jets d'air qui font se déplacer les bouteilles 2 de l'entrée vers la sortie du caisson 4, lesdites bouteilles étant simplement maintenues verticalement du fait que leurs protubérances 8 s'appuient sur les deux supports latéraux 5,6.

La figure 2 montre un carrousel de stockage 11 selon l'invention, qui comporte deux caissons de transfert, l'un 12 pour la formation d'une ligne de stockage 14 et l'autre 13 pour son évacuation.

Le mode de réalisation du caisson d'alimentation 12 est le même que ci-dessus, exception faite des deux différences explicitées ci-après. Tout d'abord, selon l'invention, les supports latéraux 15, 16 ne sont pas fixes, mais se déplacent transversalement une fois que la ligne de stockage 14 est formée, c'est-à-dire une fois que la zone sous le caisson 12 est remplie de bouteilles 2, quasiment en contact les unes avec les autres, entrant dans le sens de la flèche D, la première bouteille étant bloquée par une butée.

La seconde différence dans le mode de réalisation du caisson d'alimentation 12 est la conséquence du déplacement transversal des bouteilles entraînées par les supports latéraux. La partie haute de la bouteille 2 doit pouvoir se déplacer librement sous le caisson de transfert. On comprend que celui-ci ne peut pas avoir la forme en U renversé de la figure 1, mais a la forme d'un parallélépipède rectangle dont la face inférieure est placée au-dessus des bouteilles.

Les supports latéraux 15,16 sont intégrés dans un carrousel 11 montré à la figure 2 en forme de boucle oblongue avec deux zones rectilignes 17,18 et deux zones en arc de cercle 19, 20.

Le carrousel 11 est entraîné en déplacement discontinu dans le sens de la flèche F par un dispositif mécanique non représenté : il s'agit par exemple d'un dispositif à crémaillère, s'engrenant dans les maillons des chaînes transversales 22, ledit dispositif étant lui-même entraîné par un moteur électrique dont la rotation pas à pas est commandée par un micro-processeur. Le carrousel 11 avance pas à pas d'une distance juste suffisante pour permettre l'alimentation d'une nouvelle rangée de bouteilles dans la ligne de stockage maintenant vide sous le caisson 12. Cette distance est variable selon le type de bouteilles, elle est par exemple de 100mm pour des bouteilles ayant un diamètre de 88mm.

La zone de stockage, dans le carrousel 11 de la figure 2, est comprise entre le caisson d'entrée 12 et le caisson 13 de sortie. Lors de l'évacuation par le caisson de sortie 13, la rangée de bouteilles correspondant à la ligne de stockage 14 est propulsée dans le sens de la flèche D par les jets d'air, la première bouteille n'étant plus bloquée par une butée.

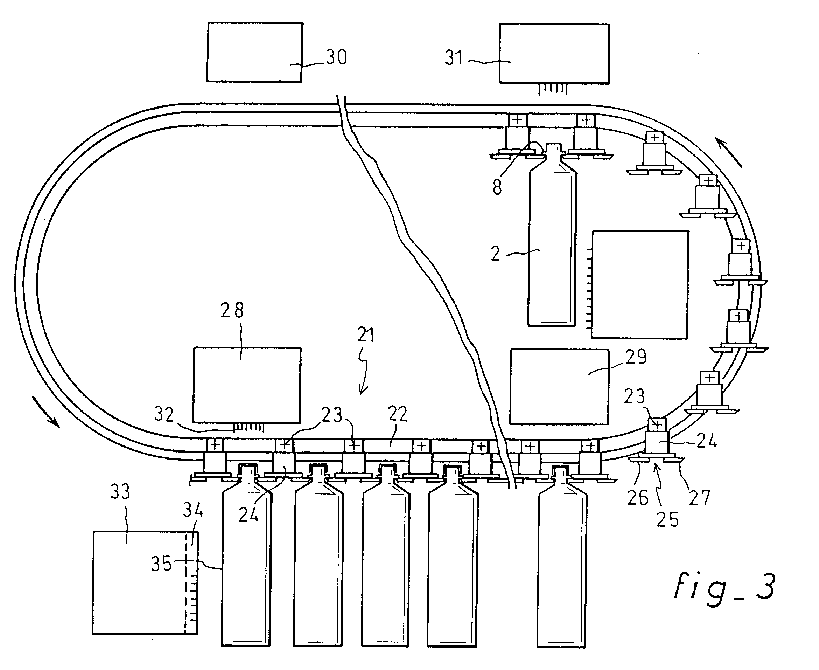

Selon le premier exemple de réalisation illustré par la figure 3, les supports latéraux supportant les bouteilles sont intégrés dans le carrousel 21 à la manière de balancelles.

Le carrousel 21 comporte deux chaînes transversales 22 dont au moins certains maillons successifs comportent des axes 23 de rotation. A ces axes 23 sont suspendues des pièces 24. Sous la face 25 inférieure de chaque pièce 24 sont fixées à leurs extrémités deux plaques rectangulaires 26,27 dont la longueur correspond à celle du caisson 28 de soufflage et donc à celle de la ligne de stockage. Chaque plaque 26,27 déborde latéralement de la pièce 24. Le centre de gravité de la pièce 24 est situé sous l'axe de rotation 23 de sorte que les plaques 26,27 formant supports latéraux sont constamment horizontales quelle que soit la position de la pièce 24 sur la boucle formée par les chaînes 22, comme cela apparaît clairement sur la figure 3.

Les zones de stockage du carrousel sont situées exclusivement dans les zones rectilignes 17,18 (sur la figure 2). Dans ces zones, l'écartement entre deux pièces 23 successives est déterminé en sorte que l'espace entre la plaque 26 d'une pièce 24 donnée et la plaque 27 adjacente de la pièce 24 suivante soit juste légèrement supérieur au diamètre du col 7 d'une bouteille 2 sous le niveau de la protubérance 8 et inférieur au diamètre au niveau de la protubérance 8.

Ainsi, les bouteilles 2 sont maintenues par les plaques 26,27 appartenant à deux pièces 24 successives sur les chaînes 22. Dans les zones 19,20, les pièces 24 suivent l'arc de cercle et l'écartement précité n'existe plus, ces zones 19,20 ne peuvent donc servir au stockage des bouteilles 2.

De préférence dans ce cas le carrousel 21 est équipé dans la zone rectiligne inférieure 17 d'un caisson d'entrée 28 et d'un caisson de sortie 29 situés dans les parties extrêmes de cette zone. De même dans la zone rectiligne supérieure 18, le carrousel 21 est équipé d'un caisson d'entrée 30 et d'un caisson de sortie 31, situés respectivement au-dessus des caissons d'entrée 28 et de sortie 29 de la zone rectiligne inférieure 17.

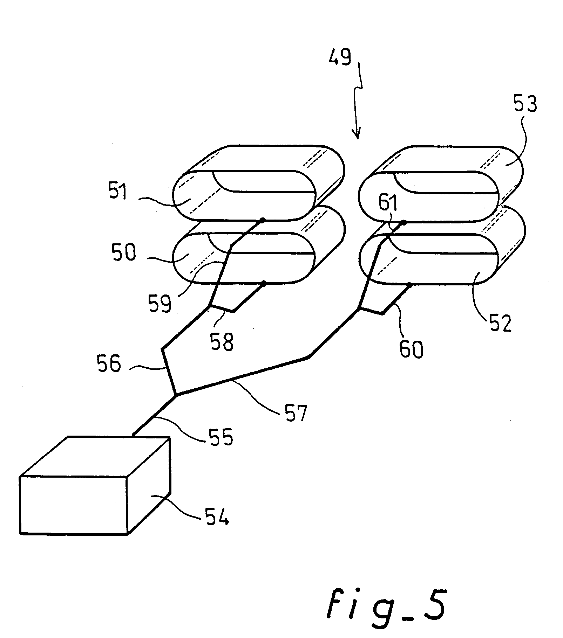

L'alimentation et l'évacuation des lignes de stockage correspondantes se font à l'aide de circuits de dérivation à deux niveaux, comme celui représenté à la figure 5.

Les caissons 28, 29,30, 31 de propulsion par jet d'air des bouteilles ont la forme de parallélépipède rectangle : les grilles 32 dirigent les jets d'air vers les bouteilles 2 sous le caisson 28. Eventuellement, si nécessaire, il est possible d'adjoindre au caisson 28 supérieur un caisson latéral 33, placé sous le niveau des plaques 26, 27 le long de la ligne de stockage correspondant au caisson supérieur 28 et muni de grilles 34 orientées obliquement en sorte que les jets d'air soient dirigés vers les flancs 35 des bouteilles 2. Le caisson latéral 33 peut être remplacé par un caisson inférieur, du même type que le caisson supérieur 28, mais placé sous les bouteilles 2 et les grilles étant dirigées obliquement vers le fond 3 desdites bouteilles 2.

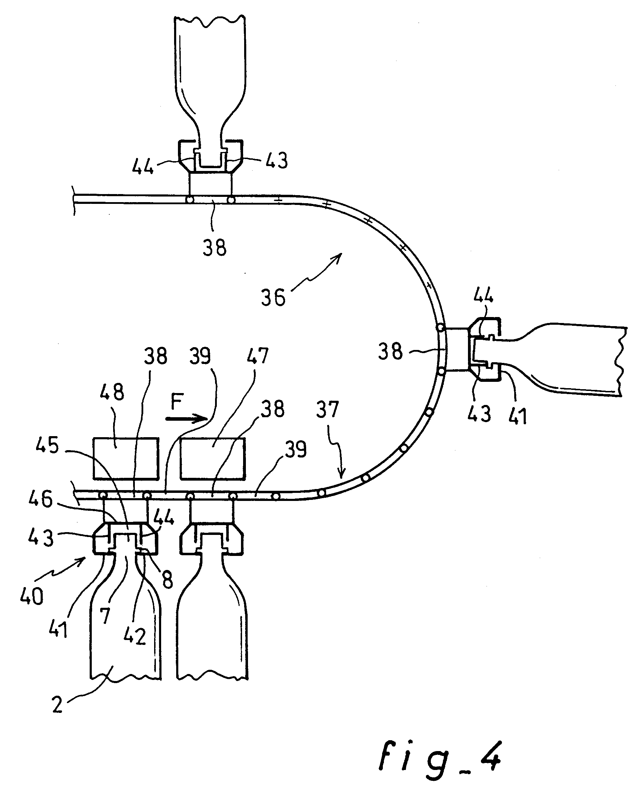

Selon le second exemple de réalisation illustré par la figure 4, les supports latéraux supportant les bouteilles 2 sont intégrés rigidement dans le carrousel 36.

Les deux chaînes 37 du carrousel 36 sont composées d'un assemblage de maillons 38 et 39. Sur les maillons 38, constituant par exemple un maillon sur deux, sont fixées rigidement des pièces 40 en forme de mâchoires. Ces pièces 40 comportent deux plaques rectangulaires 41 et 42, formant les deux supports latéraux supportant les bouteilles sous la protubérance 8. Les pièces 40 comportent également des tiges métalliques s'étendant sur toute la longueur des plaques 41,42 et délimitant en section transversale une zone correspondant au logement de la partie supérieure du col 7 : des tiges latérales 43,44 perpendiculaires aux plaques 41,42 et encadrant le haut 45 du col 7 et des tiges supérieures 46 parallèles aux plaques 41,42 et s'étendant au-dessus du haut 45 du col 7.

Une rangée de bouteilles 2 est introduite au niveau d'un caisson d'entrée du type de celui décrit à l'exemple précédent; les bouteilles 2 sont maintenues par les protubérances 8 sur les plaques 41,42.

Lors du déplacement du carrousel 36 dans le sens de la flèche F, les pièces 40 suivent l'orientation donnée par les chaînes 37. En parcourant la zone 19 où les chaînes 37 forment un arc de cercle, les bouteilles 2 passent progressivement de la position verticale qu'elles avaient dans la zone rectiligne 17, à une position inclinée, jusqu'à l'horizontale puis de nouveau verticale mais tête en bas. On comprend que les tiges 43,44 assurent le maintien du haut 45 du col 7 dans la zone 19 en arc de cercle, et que les tiges 46 assurent le soutien du haut 45 du col 7 dans la zone rectiligne supérieure 18, lorsque le stockage des bouteilles s'effectue la tête en bas.

Ainsi, dans ce second exemple de réalisation, le stockage peut se faire sur toute la périphérie du carrousel 36. Dans ce cas, les caissons d'entrée et de sortie sont placés dans la zone rectiligne 17, l'un à côté de l'autre, le caisson d'entrée 47 étant à droite du caisson de sortie 48 sur la figure 4 de sortie pour que lors du déplacement du carrousel 36 dans le sens de la flèche F la ligne de stockage entrée dans le caisson 47 fasse quasiment un tour complet avant d'atteindre le caisson de sortie 48.

Dans l'un ou l'autre mode de réalisation, on peut insérer dans le carrousel un ou plusieurs caissons auxiliaires de transfert, destinés au purgeage des bouteilles défectueuses par exemple : le fonctionnement de ce caisson de purgeage étant synchronisé avec les moyens de déplacement du carrousel et aussi avec le système automatique ou manuel de détection de défauts.

Sur la figure 5 on a représenté très schématiquement une partie d'installation 49 de transfert équipée de quatre carrousels 50, 51, 52, 53. La machine d'extrusion soufflage 54 est le point de départ d'un circuit d'alimentation 55 qui comporte une première dérivation horizontale en deux branches 56,57, chacune de ces deux branches 56,57 est ensuite dérivée en deux sous-branches respectivement 58,59 et 60,61 les unes au-dessus des autres. Ces quatre branches alimentent les caissons d'entrée des quatre carrousels 50,51,52,53, les carrousels 50 et 51 étant l'un au-dessus de l'autre et côte à côte avec les carrousels 52,53. L'évacuation des lignes de stockage des carrousels se fait comme pour l'entrée mais inversement avec quatre sous-branches de dérivation en deux niveaux puis deux branches de dérivation horizontale jusqu'à l'alimentation proprement dite de la machine de remplissage des bouteilles.

Le concept de carrousel et de superposition permet d'une part une très grande accumulation de bouteilles et d'autre part un encombrement très réduit. Le demandeur estime que le stockage dynamique horaire de 40.000 bouteilles de 88mm de diamètre peut être réalisé grâce à l'installation de l'invention dans une aire de l'ordre de 120m² avec une hauteur sous plafond de 3 mètres environ.

L'invention n'est pas limitée aux deux exemples de réalisation qui ont été décrits ci-dessus à titre non exhaustif, mais en couvre toutes les variantes.

En particulier, et c'est un autre avantage du concept en carrousel, il est possible de donner au carrousel - par adaptation des glissières supportant les deux chaînes transversales - toutes sortes de formes et donc faire occuper au carrousel des espaces d'un atelier, qui seraient autrement inoccupés.

Chaque pièce de solidarisation, assurant la solidarisation ou la fixation des plaques formant supports latéraux pour les bouteilles, peut être réalisée en un ou plusieurs éléments distincts. En particulier, les deux plaques 26,27 du premier exemple peuvent être une seule et même plaque, réalisée en composite renforcée ayant un épaulement médian en forme de T et montée par coulissement dans des profilés solidaires des chaînes de configuration adéquate . Dans cette solution, en cas d'usure, du fait du frottement des bouteilles, il est possible de ne remplacer que la plaque, sans avoir à effectuer un démontage complexe.

Le dispositif de stockage, par accumulation dynamique de l'invention, est particulièrement adapté au stockage des bouteilles en matière plastique comme décrit ci-dessus, mais peut également s'appliquer pour tous récipients transférés par jets d'air et soutenus par des supports latéraux placés sous une portion plus large de leur col.

Le micro-processeur commandant les moyens d'entraînement du ou des carrousels est programmé en fonction des cadences en amont et en aval du dispositif de stockage ; on comprend que le dispositif correspond à un stock tampon maximum de récipients, et que la programmation va permettre de moduler la valeur du stock utile en agissant sur le déplacement transversal, par exemple en ne remplissant qu'une ligne de stockage sur deux.

Dans le cas où la cadence d'entrée serait telle qu'elle occasionnerait un surnombre de récipients dans le dispositif, on pourrait utiliser un caisson annexe, du type purgeage, pour évacuer les récipients excédentaires dans un circuit indépendant.

## Revendications (Revendications pour l'(les) Etat(s) contractant(s) suivant(s): AT, BE, CH, DK, ES, GR, LI, LU, NL, SE)

1. Dispositif de stockage, par accumulation dynamique, de récipients (2) qui comportent une protubérance (8) au niveau de leur col (7), comprenant des moyens de transfert par jets d'air desdits récipients (2) le long d'une ligne (14) délimitée par deux supports latéraux aptes à supporter les récipients (2) par leurs protubérances (8) lors de leur transfert, caractérisé en ce qu'il comporte :
a. un carrousel (11) constitué d'une multiplicité de supports latéraux délimitant deux à deux une pluralité de lignes de stockage parallèles à ladite ligne ;
b. au moins un ensemble de transfert (12,13) par jets d'air, placé en regard du carrousel, au droit d'une ligne de stockage (14), pour la formation et pour l'évacuation de ladite ligne ;
c. et des moyens d'entraînement aptes à déplacer pas à pas le carrousel (11) transversalement par rapport à ladite ligne, en synchronisation avec le fonctionnement du ou des ensembles de transfert (12,13).

2. Dispositif selon la revendication 1 caractérisé en ce que le carrousel (11) a la forme d'un boucle oblongue ayant deux zones sensiblement rectilignes (17,18), et le dispositif comporte au moins quatre ensembles transferts, un ensemble de formation et un ensemble d'évacuation étant placés sensiblement aux extrémités opposées de chaque zone rectiligne.

3. Dispositif selon la revendication 1 caractérisé en ce qu'il comporte un ensemble transfert de formation et un ensemble d'évacuation, placés sur le carrousel le long de deux lignes adjacentes en sorte qu'une ligne de stockage parcourt toute la boucle du carrousel entre l'ensemble de formation et l'ensemble d'évacuation.

4. Dispositif selon la revendication 1 caractérisé en ce que le carrousel (11) comporte deux chaînes transversales (22), mues par les moyens d'entraînement, dont sont solidaires les extrémités avant et arrière des supports latéraux par des pièces de solidarisation et en ce que le ou les ensembles de transfert comportent des propulseurs placés soit au-dessus du plan horizontal passant par les deux chaînes, projetant obliquement les jets d'air au-dessus des récipients de la ligne de stockage, soit en-dessous du plan horizontal passant par les deux chaînes projetant les jets d'air, latéralement sur le flanc des récipients de la ligne de stockage ou obliquement sur le fond des récipients.

5. Dispositif selon les revendications 2 et 4 caractérisé en ce que chaque pièce de solidarisation (24) est solidaire des deux chaînes transversales (22) par un axe de rotation (23) et le ou les supports latéraux (26,27) correspondant à ladite pièce (24) est une plaque rectangulaire dont les extrémités avant et arrière sont fixées sous ladite pièce (24).

6. Dispositif selon les revendications 3 et 4 caractérisé en ce que chaque pièce de solidarisation (40) est fixée rigidement aux deux chaînes transversales (22) et en ce qu'à une même pièce de solidarisation (40) sont fixées deux plaques rectangulaires (41,42) formant mâchoires et correspondant aux deux supports latéraux d'une même ligne de stockage.

7. Dispositif selon la revendication 6 caractérisé en ce que chaque pièce de solidarisation (40) comporte en outre des tiges (43,44,46) encadrant le haut (45) du col (7) des bouteilles (2), formant la ligne de stockage, correspondant à ladite pièce (40).

8. Installation de transfert de récipients caractérisée en ce qu'elle comporte un circuit de dérivation pour l'alimentation et l'évacuation des lignes de stockage d'au moins deux dispositifs de stockage selon la revendication 1.

9. Installation selon la revendication 8 caractérisée en ce qu'elle comporte quatre dispositifs de stockage (50,51,52,53) selon la revendication 1 dont les carrousels sont, deux à deux, côte à côte et l'un au-dessus de l'autre, toutes les lignes de stockage étant parallèles.

## Revendications (Revendications pour l'(les) Etat(s) contractant(s) suivant(s): DE, GB, IT)

1. Dispositif de stockage , par accumulation dynamique, de récipients (2) qui comportent une protubérance (8) au niveau de leur col (7), comprenant :
a. un carrousel (11) constitué d'une multiplicité de supports latéraux délimitant deux à deux une pluralité de lignes de stockage parallèles;
b. un premier ensemble transfert par jets d'air desdits récipients (2), qui est placé en regard du carrousel, au droit d'une ligne de stockage (14), délimitée par deux supports latéraux aptes à supporter les récipients (2) par leurs protubérances (8) lors de leur transfert;
c. et des moyens d'entraînement aptes à déplacer pas à pas le carrousel (11) transversalement par rapport à ladite ligne, en synchronisation avec le fonctionnement de l'ensemble de transfert,
le premier ensemble transfert (12) permettant la formation des lignes de stockage (14), le dispositif de stockage comprenant en outre au moins un deuxième ensemble transfert (13) par jets d'air, pour l'évacuation des lignes de stockage (14), les deux ensembles transfert de formation et d'évacuation (12,13 ) étant placés le long de deux lignes distinctes l'une de l'autre.

2. Dispositif selon la revendication 1 caractérisé en ce que le carrousel (11) a la forme d'un boucle oblongue ayant deux zones sensiblement rectilignes (17,18) , et le dispositif comporte au moins quatre ensembles transferts, un ensemble de formation et un ensemble d'évacuation étant placés sensiblement aux extrémités opposées de chaque zone rectiligne.

3. Dispositif selon la revendication 1 caractérisé en ce que l'ensemble transfert de formation et l' ensemble transfert d'évacuation sont placés sur le carrousel le long de deux lignes adjacentes en sorte qu'une ligne de stockage parcourt toute la boucle du carrousel entre l'ensemble de formation et l'ensemble d'évacuation.

4. Dispositif selon la revendication 1 caractérisé en ce que le carrousel (11) comporte deux chaînes transversales (22), mues par les moyens d'entraînement , dont sont solidaires les extrémités avant et arrière des supports latéraux par des pièces de solidarisation et en ce que les ensembles de transfert comportent des propulseurs placés soit au-dessus du plan horizontal passant par les deux chaînes , projetant obliquement les jets d'air au-dessus des récipients de la ligne de stockage, soit en-dessous du plan horizontal passant par les deux chaînes projetant les jets d'air,latéralement sur le flanc des récipients de la ligne de stockage ou obliquement sur le fond des récipients.

5. Dispositif selon les revendications 2 et 4 caractérisé en ce que chaque pièce de solidarisation (24) est solidaire des deux chaînes transversales (22) par un axe de rotation (23) et le ou les supports latéraux (26,27) correspondant à ladite pièce (24) est une plaque rectangulaire dont les extrémités avant et arrière sont fixées sous ladite pièce (24).

6. Dispositif selon les revendications 3 et 4 caractérisé en ce que chaque pièce de solidarisation (40) est fixée rigidement aux deux chaînes transversales (22) et en ce qu'à une même pièce de solidarisation (40) sont fixées deux plaques rectangulaires (41,42) formant mâchoires et correspondant aux deux supports latéraux d'une même ligne de stockage.

7. Dispositif selon la revendication 6 caractérisé en ce que chaque pièce de solidarisation (40) comporte en outre des tiges (43,44,46) encadrant le haut (45) du col (7) des bouteilles (2), formant la ligne de stockage, correspondant à ladite pièce (40).

8. Installation de transfert de récipients caractérisée en ce qu'elle comporte un circuit de dérivation pour l'alimentation et l'évacuation des lignes de stockage d'au moins deux dispositifs de stockage selon la revendication 1.

9. Installation selon la revendication 8 caractérisée en ce qu'elle comporte quatre dispositifs de stockage (50,51,52,53) selon la revendication 1 dont les carrousels sont, deux à deux, côte à côte et l'un au-dessus de l'autre, toutes les lignes de stockage étant parallèles.

## Claims (Claims for the following Contracting State(s): AT, BE, CH, DK, ES, GR, LI, LU, NL, SE)

1. Device for storage, by dynamic accumulation, of containers (2) which include a protuberance (8) at the level of their neck (7), comprising means for conveying the said containers (2) using air-jets, along a line (14) bounded by two lateral supports capable of supporting the containers (2) via their protuberances (8) during their conveying, characterized in that it includes:
a. a carousel (11) consisting of a multiplicity of lateral supports which define, in pairs, a plurality of storage lines parallel to the said line;
b. at least one air-jet conveyor assembly (12, 13), placed facing the carousel, in line with a storage line (14), for forming and removing the said line;
c. and drive means capable of displacing the carousel (11) stepwise transversely with respect to the said line, in synchronization with the operation of the conveyor assembly or assemblies (12,13).

2. Device according to Claim 1, characterized in that the carousel (11) has the shape of an oblong loop having two substantially straight regions (17, 18) and the device includes at least four conveyor assemblies, one formation assembly and one removal assembly being placed substantially at the opposite ends of each straight region.

3. Device according to Claim 1, characterized in that it includes a formation conveyor assembly and a removal assembly, which are placed on the carousel along two adjacent lines so that a storage line runs over the entire loop of the carousel between the formation assembly and the removal assembly.

4. Device according to Claim 1, characterized in that the carousel (11) includes two transverse chains (22), moved by the drive means, in which the front and rear ends of the lateral supports are solidly attached by attachment means and in that the conveyor assembly or assemblies include propulsion units which are placed either above the horizontal plane passing through the two chains, obliquely projecting the air-jets above the containers of the storage line, or below the horizontal plane passing through the two chains, projecting the air-jets laterally onto the flank of the containers of the storage line or obliquely onto the bottom of the containers.

5. Device according to Claims 2 and 4, characterized in that each attachment part (24) is solidly attached to the two transverse chains (22) by a rotational axle (23) and the lateral support or supports (26, 27) corresponding to the said part (24) is a rectangular plate whose front and rear ends are fixed under the said part (24).

6. Device according to Claims 3 and 4, characterized in that each attachment part (40) is rigidly fixed to the two transverse chains (22) and in that two rectangular plates (41, 42) are fixed to one and the same attachment part (40), which plates form jaws and correspond to the two lateral supports of one and the same storage line.

7. Device according to Claim 6, characterized in that each attachment part (40) further includes rods (43, 44, 46) framing the top (45) of the neck (7) of the bottles (2), forming the storage line, corresponding to the said part (40).

8. Container conveyor installation, characterized in that it includes a branch circuit for feeding and removing the storage lines of at least two storage devices according to Claim 1.

9. Installation according to Claim 8, characterized in that it includes four storage devices (50, 51, 52, 53) according to Claim 1, the carousels of which are, in pairs, side by side and one above the other, all the storage lines being parallel.

## Claims (Claims for the following Contracting State(s): DE, GB, IT)

1. Device for storage, by dynamic accumulation, of containers (2) which include a protuberance (8) at the level of their neck (7), comprising:
a. a carousel (11) consisting of a multiplicity of lateral supports defining, in pairs, a plurality of parallel storage lines;
b. a first assembly for conveying by air-jets the said containers (2) which is placed facing the carousel, in line with a storage line (14), defined by two lateral supports capable of supporting the containers (2) via their protuberances (8) during their conveying;
c. and drive means capable of displacing the carousel (11) stepwise transversely with respect to the said line, in synchronization with the operation of the conveyor assembly,
the first conveyor assembly (12) allowing formation of the storage lines (14), the storage device further comprising at least a second air-jet conveyor assembly (13), for removing the storage lines (14), the two conveyor assemblies (12, 13), for formation and removal, being placed along two lines which are separate from each other.

2. Device according to Claim 1, characterized in that the carousel (11) has the shape of an oblong loop having two substantially straight regions (17, 18) and the device includes at least four conveyor assemblies, one formation assembly and one removal assembly being placed substantially at the opposite ends of each straight region.

3. Device according to Claim 1, characterized in that the formation conveyor assembly and the removal conveyor assembly are placed on the carousel along two adjacent lines so that a storage line runs over the entire loop of the carousel between the formation assembly and the removal assembly.

4. Device according to Claim 1, characterized in that the carousel (11) includes two transverse chains (22), moved by the drive means, in which the front and rear ends of the lateral supports are solidly attached by attachment parts and in that the conveyor assemblies include propulsion units placed either above the horizontal plane passing through the two chains, obliquely projecting the air-jets above the containers of the storage line, or below the horizontal plane passing through the two chains, projecting the air-jets laterally onto the flank of the containers of the storage line or obliquely onto the bottom of the containers.

5. Device according to Claims 2 and 4, characterized in that each attachment part (24) is solidly attached to the two transverse chains (22) by a rotational axle (23) and the lateral support or supports (26, 27) corresponding to the said part (24) is a rectangular plate whose front and rear ends are fixed under the said part (24).

6. Device according to Claims 3 and 4, characterized in that each attachment part (40) is rigidly fixed to the two transverse chains (22) and in that two rectangular plates (41, 42) are fixed to one and the same attachment part (40), which plates form jaws and correspond to the two lateral supports of one and the same storage line.

7. Device according to Claim 6, characterized in that each attachment part (40) further includes rods (43, 44, 46) framing the top (45) of the neck (7) of the bottles (2), forming the storage line, corresponding to the said part (40).

8. Container conveyor installation, characterized in that it includes a branch circuit for feeding and removing the storage lines of at least two storage devices according to Claim 1.

9. Installation according to Claim 8, characterized in that it includes four storage devices (50, 51, 52, 53) according to Claim 1, the carousels of which are, in pairs, side by side and one above the other, all the storage lines being parallel.

## Patentansprüche (Patentansprüche für folgende(n) Vertragsstaat(en): AT, BE, CH, DK, ES, GR, LI, LU, NL, SE)

1. Vorrichtung zur dynamischen Speicherung von Behältern (2), die an ihrem Hals (7) einen Vorsprung (8) aufweisen, mit Fördermitteln zum Fördern der Behälter (2) mittels Luftstrahlen entlang einer Reihe (14), die durch zwei seitliche Halterungen begrenzt ist, die geeignet sind, die Behälter (2) an ihren Vorsprüngen (8) während des Förderns zu halten,
**gekennzeichnet** durch:
a. einen Kreisel (11), der aus einer Mehrzahl von seitlichen Halterungen besteht, die jeweils paarweise eine Mehrzahl von zu der Reihe parallelen Lagerreihen begrenzen;
b. wenigstens eine Fördereinrichtung (12, 13) zum Fördern mittels Luftstrahlen, die gegenüber dem Kreisel angeordnet und auf eine Lagerreihe (14) ausgerichtet ist, zur Bildung und Entnahme der Reihe,
c. Antriebsmittel, die geeignet sind, den Kreisel (11) schrittweise quer zu der Reihe synchron mit dem Betrieb des oder der Fördereinrichtung(en) (12, 13) fortzubewegen.

2. Vorrichtung nach Anspruch 1,
dadurch gekennzeichnet,
daß der Kreisel (11) die Form einer ovalen Schleife mit zwei im wesentlichen geradlinigen Bereichen (17, 18) aufweist und die Vorrichtung wenigstens vier Fördereinrichtungen aufweist, wobei eine Fördereinrichtung zur Bildung und eine Fördereinrichtung zur Entnahme im wesentlichen an den gegenüberliegenden Enden eines jeden geradlinigen Bereichs angeordnet sind.

3. Vorrichtung nach Anspruch 1,
gekennzeichnet durch
eine Fördereinrichtung zur Bildung und eine Entnahmeeinrichtung, die am Kreisel an zwei benachbarten Reihen angeordnet sind, derart, daß eine Lagerreihe die ganze Schleife des Kreisels zwischen der Bildungseinrichtung und der Entnahmeeinrichtung durchläuft.

4. Vorrichtung nach Anspruch 1,
dadurch gekennzeichnet,
daß der Kreisel (11) zwei transversale Ketten (22) aufweist, die durch die Antriebsmittel bewegt werden, mit denen die vorderen und hinteren Enden der seitlichen Halterungen durch Verbindungsstücke verbunden sind, und daß die Fördereinrichtung oder Fördereinrichtungen Treibeinrichtungen aufweisen, die oberhalb der durch die zwei Ketten verlaufenden horizontalen Ebene angeordnet sind und die Luftstrahlen schräg von oben auf die Behälter der Reihe ausstoßen oder unterhalb der durch die beiden Ketten verlaufenden horizontalen Ebene angeordnet sind und die Luftstrahlen von der Seite auf die Flanken der Behälter der Lagerreihe oder schräg auf den Boden der Behälter ausstoßen.

5. Vorrichtung nach Ansprüchen 2 und 4,
dadurch gekennzeichnet,
daß jedes Verbindungsteil (24) mit den beiden transversalen Ketten (22) über eine Drehachse (23) verbunden ist, und daß der oder die dem Teil (24) entsprechenden lateralen Halterungen (26, 27) eine rechteckige Platte sind, deren vorderes und hinteres Ende unter dem Teil (24) befestigt sind.

6. Vorrichtung nach Ansprüchen 3 und 4,
dadurch gekennzeichnet,
daß jedes Verbindungsteil (40) starr an den beiden transversalen Ketten (22) befestigt ist, und daß an einem Verbindungsteil (40) zwei rechteckige Platten (41, 42) befestigt sind, die Klemmen bilden und den zwei seitlichen Halterungen jeweils einer Lagerreihe entsprechen.

7. Vorrichtung nach Anspruch 6,
dadurch gekennzeichnet,
daß jedes Verbindungsteil (40) zusätzlich Stangen (43, 44, 46) aufweist, die das obere Ende (45) des Halses (7) der Flaschen (2) einfassen, die die dem Teil (40) entsprechende Lagerreihe bilden.

8. Behälterförderanlage,
dadurch gekennzeichnet,
daß sie eine Zweigleitung zur Versorgung und Entnahme von Lagerreihen von wenigstens zwei Lagervorrichtungen nach Anspruch 1 umfaßt.

9. Anlage nach Anspruch 8,
dadurch gekennzeichnet,
daß sie vier Lagervorrichtungen (50, 51, 52, 53) nach Anspruch 1 umfaßt, deren Kreisel paarweise nebeneinander und übereinander liegen, wobei alle Lagerreihen parallel sind.

## Patentansprüche (Patentansprüche für folgende(n) Vertragsstaat(en): DE, GB, IT)

1. Vorrichtung zur dynamischen Speicherung von Behältern (2), die an ihrem Hals (7) einen Vorsprung (8) aufweisen, mit:
a. einem Kreisel (11), der aus einer Mehrzahl von seitlichen Halterungen besteht, die jeweils paarweise eine Mehrzahl von parallelen Lagerreihen begrenzen;
b. einer ersten Fördereinrichtung zum Fördern der Behälter (2) mittels Luftstrahlen, die gegenüber dem Kreisel angeordnet und auf eine Lagerreihe (14) ausgerichtet ist, die durch zwei seitliche Halterungen begrenzt ist, die geeignet sind, die Behälter (2) an ihren Vorsprüngen (8) während des Förderns zu halten;
c. Antriebsmitteln, die geeignet sind, den Kreisel (11) schrittweise quer zu der Reihe synchron mit dem Betrieb der Fördereinrichtung fortzubewegen, wobei die erste Fördereinrichtung (12) die Bildung von Lagerreihen (14) ermöglicht, die Lagervorrichtung zusätzlich wenigstens eine zweite Fördereinrichtung mittels Luftstrahlen (13) zur Entnahme der Lagerreihen (14) aufweist und die zwei Fördereinrichtungen zur Bildung und zur Entnahme (12, 13) an zwei voneinander unterschiedlichen Reihen angebracht sind.

2. Vorrichtung nach Anspruch 1,
dadurch gekennzeichnet,
daß der Kreisel (11) die Form einer ovalen Schleife mit zwei im wesentlichen geradlinigen Bereichen (17, 18) aufweist und die Vorrichtung wenigstens vier Fördereinrichtungen aufweist, wobei eine Fördereinrichtung zur Bildung und eine Fördereinrichtung zur Entnahme im wesentlichen an den gegenüberliegenden Enden einen jeden geradlinigen Bereichs angeordnet sind.

3. Vorrichtung nach Anspruch 1,
dadurch gekennzeichnet,
daß die Fördereinrichtung zur Bildung und die Fördereinrichtung zur Entnahme am Kreisel an zwei benachbarten Reihen angeordnet sind, derart, daß eine Lagerreihe die ganze Schleife des Kreisels zwischen der Bildungseinrichtung und der Entnahmeeinrichtung durchläuft.

4. Vorrichtung nach Anspruch 1,
dadurch gekennzeichnet,
daß der Kreisel (11) zwei transversale Ketten (22) aufweist, die durch die Antriebsmittel bewegt werden, mit denen die vorderen und hinteren Enden der seitlichen Halterungen durch Verbindungsstücke verbunden sind, und daß die Fördereinrichtungen Treibeinrichtungen aufweisen, die oberhalb der durch die zwei Ketten verlaufenden horizontalen Ebene angeordnet sind und die Luftstrahlen schräg von oben auf die Behälter der Reihe ausstoßen oder unterhalb der durch die beiden Ketten verlaufenden horizontalen Ebene angeordnet sind und die Luftstrahlen von der Seite auf die Flanken der Behälter der Lagerreihe oder schräg auf den Boden der Behälter ausstoßen.

5. Vorrichtung nach Ansprüchen 2 und 4,
dadurch gekennzeichnet,
daß jedes Verbindungsteil (24) mit den beiden transversalen Ketten (22) über eine Drehachse (23) verbunden ist, und daß der oder die dem Teil (24) entsprechenden lateralen Halterungen (26, 27) eine rechteckige Platte sind, deren vorderes und hinteres Ende unter dem Teil (24) befestigt sind.

6. Vorrichtung nach Ansprüchen 3 und 4,
dadurch gekennzeichnet,
daß jedes Verbindungsteil (40) starr an den beiden transversalen Ketten (22) befestigt ist, und daß an einem Verbindungsteil (40) zwei rechteckige Platten (41, 42) befestigt sind, die Klemmen bilden und den zwei seitlichen Halterungen jeweils einer Lagerreihe entsprechen.

7. Vorrichtung nach Anspruch 6,
dadurch gekennzeichnet,
daß jedes Verbindungsteil (40) zusätzlich Stangen (43, 44, 46) aufweist, die das obere Ende (45) des Halses (7) der Flaschen (2) einfassen, die die dem Teil (40) entsprechende Lagerreihe bilden.

8. Behälterförderanlage,
dadurch gekennzeichnet,
daß sie eine Zweigleitung zur Versorgung und Entnahme von Lagerreihen von wenigstens zwei Lagervorrichtungen nach Anspruch 1 umfaßt.

9. Anlage nach Anspruch 8,
dadurch gekennzeichnet,
daß sie vier Lagervorrichtungen (50, 51, 52, 53) nach Anspruch 1 umfaßt, deren Kreisel paarweise nebeneinander und übereinander liegen, wobei alle Lagerreihen parallel sind.
